Europäisches Patentamt

European Patent Office

Office européen des brevets

(19)

(11) Veröffentlichungsnummer: **0 299 491**

**A1**

(12) # EUROPÄISCHE PATENTANMELDUNG

(21) Anmeldenummer: 88111350.0

(22) Anmeldetag: 14.07.88

(51) Int. Cl.⁴: **B63H 9/10 , B63B 35/82 , F16B 7/14**

(30) Priorität: 15.07.87 DE 3723357
13.11.87 DE 3738583

(43) Veröffentlichungstag der Anmeldung:
**18.01.89 Patentblatt 89/03**

(84) Benannte Vertragsstaaten:
**AT DE FR IT NL**

(71) Anmelder: **Marker, Hannes**
**Alpspitzstrasse 37**
**D-8100 Garmisch-Partenkirchen(DE)**

(72) Erfinder: **Marker, Hannes**
**Alpspitzstrasse 37**
**D-8100 Garmisch-Partenkirchen(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heijn**
**B.Sc.(Phys.) Morgan**
**Robert-Koch-Strasse 1**
**D-8000 München 22(DE)**

(54) **Längenverstellbarer Gabelbaum.**

(57) Die Erfindung betrifft einen längenverstellbaren Gabelbaum mit einem vorderen und einem hinteren Gabelbaumteil, bei dem Endabschnitte von Holmstücken (1) des vorzugsweise hinteren Gabelbaumteils in rohrförmige Holmstücke (2) des vorderen Gabelbaumteils teleskopisch eingeschoben sind. Die Holmstücke sind dabei stufenlos in ausgewählter Einschublänge durch jeweils eine mit dem Endabschnitt des äußeren Holmstücks (2) verbundene Sperreinrichtung (10') kraftschlüssig verbindbar. Jede Sperreinrichtung (10') weist eine mit dem äußeren Holmstück (2) verbundene Muffe (11') auf, die mit ihrem freien Ende axial vom äußeren Holmstück (2) weg vorsteht. Die Muffe (11') weist an ihrem freien Ende zumindest einen axialen Schlitz (12) auf, um eine Verringerung des Innendurchmessers der Muffe (11') im Bereich ihres freien Endes zu ermöglichen. An dem geschlitzten Abschnitt der Muffe (11') ist eine eine Freigabe- und eine Sperrstellung aufweisende Klemmvorrichtung (13') vorgesehen, die in ihrer Sperrstellung den freien Endbereich der Muffe (11') fest gegen das innere Holmstück (1) drückt.

FIG. 8

Xerox Copy Centre

# Längenverstellbarer Gabelbaum

Die Erfindung betrifft einen längenverstellbaren Gabelbaum mit einem vorderen und einem hinteren Gabelbaumteil, bei dem Endabschnitte von Holmstücken des vorzugsweise hinteren Gabelbaumteils in rohrförmige Holmstücke des vorderen Gabelbaumteils teleskopisch eingeschoben und mit diesen stufenlos in ausgewählter Einschublänge durch jeweils eine mit dem Endabschnitt des äußeren Holmstücks verbundene Sperreinrichtung kraftschlüssig verbindbar sind.

Bei einem gattungsgemäßen längenverstellbaren Gabelbaum (EP-PS 0 071 220) sind die Holmstücke eines hinteren Gabelbaumteils nahezu spielfrei in äußeren Holmstücken eines vorderen Gabelbaumteils eingesteckt. Auf die den hinteren Gabelbaumteil zugewandten Enden der äußeren Holmstücke ist jeweils ein konischer Ring aufgesetzt, der mit einer ihn übergreifenden Überwurfmutter so zusammenwirkt, daß er die äußeren Holmstücke fest mit den inneren Holmstücken verklemmt, sobald die Überwurfmutter durch eine entsprechende Schraubbewegung axial gegen den konischen Ring verschoben wird.

Weiter ist aus der EP-PS 0 071 220 ein längenverstellbarer Gabelbaum bekannt, bei dem Holmstücke eines hinteren Gabelbaumteils ebenfalls in entsprechende Holmstücke eines vorderen Gabelbaumteils eingeschoben sind. Um eine bestimmte Länge bei diesem bekannten Gabelbaum einstellen zu können, ist auf den inneren Holmstücken des hinteren Gabelbaumteils jeweils eine Klemmschelle vorgesehen, die auf diesen in einer beliebigen Position festgeklemmt werden kann. Die Klemmschellen bilden somit einen Anschlag für die äußeren Holmstücke des vorderen Gabelbaumteils, so daß die Holmstücke des hinteren Gabelbaumteils nur so weit in die Holmstücke des vorderen Gabelbaumteils eingeschoben werden können, bis die äußeren Holmstücke an den Anschlagschellen anliegen.

Bei diesem bekannten Gabelbaum wird ein Herausgleiten der Holmstücke des hinteren Gabelbaumteils aus denen des vorderen Gabelbaumteils dadurch verhindert, daß das mit dem Gabelbaum verspannte Segel des Segelbretts eine Kraft auf den Gabelbaum ausübt, die versucht, das hintere Gabelbaumteil weiter in das vordere einzuschieben. Treten beim Segeln mit einem Segelbrett, bei dem ein derartiger Gabelbaum verwendet wird, Kräfte am Gabelbaum auf, die im Sinne einer Verlängerung des Gabelbaums wirken, so kann das hintere Gabelbaumteil zumindest teilweise aus dem vorderen Gabelbaumteil herausrutschen. Dies kann insbesondere dann auftreten, wenn es zu einer übermäßigen Durchbiegung des Mastes kommt, wodurch die Spannung des Segels zum Teil wesentlich verringert wird.

Ferner ist aus der DE-PS 31 25 806 ein gattungsgemäßer Gabelbaum bekannt, bei dem die Enden der Holmstücke des einen Gabelbaumteils, in die die Holmstücke des anderen Gabelbaumteils eingeschoben sind, geschlitzt sind, wobei auf den geschlitzten Enden der äußeren Holmstücke Klemmschellen aufgesetzt sind, um die äußeren Holmstükke des einen Gabelbaumteils mit den inneren Holmstücken des anderen fest zu verklemmen.

Bei diesem bekannten Gabelbaum wird zwar eine kraftschlüssige Verbindung zwischen den beiden Gabelbaumteilen ermöglicht, es ist jedoch dazu erforderlich, daß die äußeren Holmstücke mit Schlitzen versehen sind, so daß sie im Verbindungsbereich zusammengedrückt werden können.

Derartige Schlitze in den äußeren Holmstücken des Gabelbaums bilden Schwachstellen, die bei den verschiedenen auf den Gabelbaum wirkenden Kräften dazu führen können, daß die äußeren Holmstücke des Gabelbaums beschädigt werden. Dies kann insbesondere dadurch geschehen, daß die Schlitze an ihrem geschlossenen Ende infolge von Biege- und/oder Torsionskräften weiter reissen. Diese Möglichkeit wird insbesondere dadurch verstärkt, daß die äußeren Holmstücke gerade im Schlitzbereich zusätzlichen, radial nach innen gerichteten Druckkräften ausgesetzt sind.

Die Aufgabe der vorliegenden Erfindung ist es nun, einen längenverstellbaren Gabelbaum der eingangs genannten Art zu schaffen, bei dem die Holmstücke der Gabelbaumteile sowohl in Einschubs- als auch in Auszugsrichtung kraftschlüssig fest miteinander verbunden sind, ohne daß die äußeren Holmstücke durch Schlitze oder ähnliches geschwächt sind.

Diese Aufgabe wird erfindungsgemäß dadurch gelöst, daß jede Sperreinrichtung eine mit dem äußeren Holmstück verbundene Muffe aufweist, die mit ihrem freien Ende axial vom äußeren Holmstück weg vorsteht, daß die Muffe an ihrem freien Ende zumindest einen axialen Schlitz aufweist, um eine Verringerung des Innendurchmessers der Muffe im Bereich ihres freien Endes zu ermöglichen und daß an dem geschlitzten Abschnitt der Muffe eine eine Freigabe- und eine Sperrstellung aufweisende Klemmvorrichtung angeordnet ist, die in ihrer Sperrstellung den freien Endabschnitt der Muffe gegen das innere Holmstück drückt.

Durch die erfindungsgemäß vorgesehene Muffe, die mit ihrem einen Ende fest am äußeren Holmstück angeordnet ist und deren anderes Ende mit dem inneren Holmstück lösbar verklemmt werden kann, wird erreicht, daß die äußeren Holmstücke ebenso wie die inneren Holmstücke keinerlei schwächende Schlitze oder Öffnungen aufweisen müssen. Ein weiterer Vorteil besteht darin, daß die Muffe an ihrem dem inneren Holmstück zugeordneten Ende so ausgebildet werden kann, daß auch innere Holmstücke fest mit den äußeren Holmstücken verbindbar sind, deren äußere Durchmesser wesentlich kleiner als der innere Durchmesser des äußeren Holmstücks sind und die daher mit erheblichem Spiel in die äußeren Holmstücke einsteckbar sind. Ein derartiges Spiel zwischen den inneren und den äußeren Holmstücken verhindert dabei auf einfache und sichere Weise, daß sich die ineinander gesteckten Holmstücke infolge von Verunreinigungen, wie z.B. Sand, oder infolge von Korrosion so miteinander verklemmen können, daß eine Längeneinstellung praktisch nicht mehr möglich ist.

Bei einem ersten praktischen Ausführungsbeispiel der Erfindung ist vorgesehen, daß der vom äußeren Holmstück vorstehende Abschnitt der Muffe als Schelle ausgebildet ist, die geöffnet bzw. geschlossen ist, wenn die Klemmvorrichtung ihre Freigabestellung bzw. ihre Sperrstellung einnimmt.

Hierdurch wird eine Sperreinrichtung für die kraftschlüssige Verbindung der inneren und äußeren Holmstükke geschaffen, die als verhältnismäßig einfaches Bauteil preiswert hergestellt werden kann und daß zudem praktisch unverwüstbar ist. Auf diese Weise wird die Reparaturanfälligkeit des erfindungsgemäßen Gabelbaums we sentlich verringert, wobei gleichzeitig seine Nutzungsdauer verlängert ist.

Um eine einfache Montage des längenverstellbaren Gabelbaums und ggfs. einen einfachen Austausch der die Gabelbaumteile verbindenden Muffe mit zugeordneter Klemmvorrichtung zu ermöglichen, ist bei einem weiteren Ausführungsbeispiel der Erfindung vorgesehen, daß der auf dem äußeren Holmstück angeordnete Befestigungsabschnitt der Muffe entsprechend der Schelle geschlitzt ist und bei geöffneter Schelle das äußere Holmstück mit einem leichten Klemmsitz umfaßt.

Eine andere Weiterbildung der Erfindung zeichnet sich dadurch aus, daß die Schelle benachbart zum Schlitz radial nach außen vorstehende Flansche aufweist, an denen die Klemmvorrichtung angreift, um die Flansche zum Schließen der Schelle gegeneinander zu drücken, wobei die Flansche von zumindest einem Zugbolzen durchgriffen sind, an dem außerhalb der Flansche ein Exzenterhebel schwenkbar gelagert ist, bei dessen Verschwenken in einer Sperrstellung die Flansche der Schelle aufeinander zugedrückt werden.

Bei einer vorteilhaften Ausbildung der Erfindung ist vorgesehen, daß die Flansche unterschiedliche Längen aufweisen, wobei eine über Totpunkt-Hebelvorrichtung an die Flansche angelenkt, von der sie aufeinander zubewegbar sind. Hierdurch wird erreicht, daß bei einfacher Handhabung der Klemmvorrichtung für die Muffe diese in ihrer Klemm- oder Sperrstellung selbstsichernd gehalten ist, so daß sich die Klemmvorrichtung nicht von selbst lösen kann, wodurch die Sicherheit der festen Klemmverbindung zwischen den inneren und äußeren Holmstücken gewährleistet ist.

Ein anderes Ausführungsbeispiel der Erfindung ist dadurch gekennzeichnet, daß die Schelle sich übergreifende, abgebogene Endabschnitte aufweist, zwischen denen ein Kniehebel vorgesehen ist, von dem die Endabschnitte voneinander wegbewegbar sind. Auch hierbei läßt es sich auf besonders einfache Weise erreichen, daß der Kniehebel, der aus seiner Freigabe- in seine Sperrstellung gebracht wird, eine Totpunktlage überschreiten muß, so daß er ebenfalls selbstsichernd in seiner Sperrstellung arretiert ist.

Eine weitere Ausführungsform der Erfindung zeichnet sich dadurch aus, daß die Flansche an ihren voneinander abgewandten Außenseiten Nockenflächen aufweisen, die zur Achse eines die Flansche durchgreifenden Bolzens geneigt verlaufen, und daß im losen Zustand der Schelle an den Nockenflächen zwei entsprechend geformte Nockenflächen eines auf dem Bolzen schwenkbar gelagerten Spannhebels anliegen, dessen Nockenflächen beim Verschwenken des Spannhebels die Flansche der Schelle zusammendrücken.

Um hierbei eine Sicherung des Hebels der Klemmvorrichtung in seiner Sperrstellung zu gewährleisten, ist bei einer vorteilhaften Weiterbildung der Erfindung vorgesehen, daß an dem Spannhebel ein elastischer Ringabschnitt befestigt ist, der das äußere Holmstück in einem lösbaren Klemmsitz umgreift, wenn der Spannhebel in seiner Sperrstellung ist, um diesen zu arretieren.

Eine andere Möglichkeit zur Sicherung der Sperrstellung des Hebels der Klemmvorrichtung besteht erfindungsgemäß darin, daß ein zumindest an einer Nockenfläche ausgebildeter Vorsprung und eine in der damit zusammenwirkenden Nockenfläche asugebildete, entsprechende Vertiefung vorgesehen sind, die im gespannten Zustand der Schelle lösbar ineinander einrasten.

Bei einem anderen praktischen Ausführungsbeispiel der Erfindung ist vorgesehen, daß am freien Ende der Muffe auf deren Außenseite zumindest ein Keil mit einer radial außen liegenden Keilfläche vorgesehen ist, der mit einem Druckglied der Klemmvorrichtung so zusammenwirkt, daß das freie Ende der Muffe mit seiner Innenfläche fest gegen das innere Holmstück gepreßt wird, wenn das Druckglied auf die Keilfläche aufläuft.

Hierdurch läßt sich die Handhabung des Gabelbaums bei der Längenverstellung besonders einfach gestalten, da zur Erzeugung der nötigen Klemmkraft relativ große Betätigungswege auf platzsparende Weise zur Verfügung gestellt werden können, so daß relativ kleine Betätigungskräfte zur Erzeugung der Klemmkraft ausreichen.

Bei einer Weiterbildung der Erfindung ist vorgesehen, daß der wenigstens eine Keil in Umfangsrichtung der Muffe verläuft. Hierdurch wird erreicht, daß das Druckglied zur Erzeugung der Klemmkraft nur in Umfangsrichtung der Holmstücke bewegt werden muß.

Um einen besonders langen Betätigungsweg für das Druckglied vorzusehen, ist bei einer anderen Weiterbildung der Erfindung vorgesehen, daß der Keil sich in Umfangsrichtung nahezu vollständig um die Muffe herumerstreckt.

Um die Verteilung des Drucks der Muffe auf das innere Holmstück besser zu verteilen, ist nach einer anderen Weiterbildung der Erfindung vorgesehen, daß im freien Ende der Muffe zwei einander diametral gegenüberliegende Schlitze vorgesehen sind und daß zwei Keile sich jeweils umfangsmäßig von Schlitz zu Schlitz erstrecken.

Eine weitere Verbesserung der Druckverteilung läßt sich dadurch erreichen, daß der wenigstens eine Keil an einer sich in Radialrichtung erstreckenden, freigeschnittenen elastischen Zunge am freien Ende der Muffe vorgesehen ist.

Hierdurch ist die notwendige Bewegbarkeit des Keils sichergestellt, der im frei verschieblichen Zustand des inneren Holmstück mit seiner radial inneren Anlagefläche lose an dem inneren Holmstück anliegt oder geringfügig von diesem beabstandet ist und durch das Druckglied der Klemmvorrichtung fest gegen das innere Holmstück angedrückt werden kann. Der Keil befindet sich zweckmäßigerweise dabei am vorderen Ende der elastischen Zunge.

Bei einer vorteilhaften Weiterbildung der Erfindung ist vorgesehen, daß die Klemmvorrichtung eine drehbar auf der Muffe angeordnete Außenmuffe aufweist, in deren Innenfläche eine Nut zur Aufnahme und Führung des wenigstens einen Keils ausgebildet ist.

Bei einer vorteilhaften Weiterbildung der Erfindung ist vorgesehen, daß das Druckglied für den Keil am Nutboden in der Außenmuffe angeordnet ist, wobei an der radial äußeren Seite der elastischen Zunge ein Vorsprung angebracht ist, der in eine von in Umfangsrichtung voneinander beabstandete Schultern begrenzte Asusparung in der Innenfläche der Außenmuffe eingreift, um die Drehbarkeit der Außenmuffe auf der Muffe zu begrenzen.

Hierdurch läßt sich auf besonders einfache Weise erreichen, daß das Druckglied axial unverschieblich und unverlierbar am Gabelbaum angeordnet ist. Wenn jedoch eine Freigabe der Außenmuffe erfolgen soll, können die elastischen Zungen der Muffe bei Abwesenheit des inneren Holmstücks radial nach innen gedrückt werden, so daß die Keile aus der Nut austreten können um die Außenmuffe leicht abnehmen zu können.

Um stets eine definierte Druckkraft zwischen der Muffe und dem inneren Holmstück zu gewährleisten, ist erfindungsgemäß bei einer anderen Ausbildung vorgesehen, daß das Druckglied ein der Form des Keils entsprechender Gegenkeil ist, wobei zwei sich diametral gegenüberliegende Keile an zwei elastischen Zungen ausgebildet sind. Hierbei lassen sich die Keile so flach ausbilden, daß die Klemmposition allein durch Reibung aufrechterhalten werden kann.

Bei einer anderen Weiterbildung der Erfindung ist vorgesehen, daß drei gleichmäßig über den Umfang verteilte Keile an drei elastischen Zungen ausgebildet sind.

Entsprechend kann auch vorgesehen sein, daß das Druckglied im wesentlichen zylindrisch ist, wobei dessen Zylinderwand auf die Keilfläche aufläuft.

Durch die Anordnung des oder der Teile an freigeschnittenen, elastischen Zungen wird die notwendige Beweglichkeit des Keils in Radialrichtung des Holmstücks sichergestellt, so daß die Keile bei gelöster Klemmvorrichtung mit ihren radialen inneren Anlageflächen lose an dem inneren Holmstück anliegen oder sogar geringfügig von diesem beabstandet sind und durch die Druckglieder der Klemmvorrichtung fest gegen das innere Holmstück angedrückt werden können. Hierdurch lassen sich auf besonders einfache Weise auch relativ große Unterschiede zwischen dem Innendurchmesser der Muffe im Bereich der Keile und dem Außendurchmesser des inneren Holmstücks überbrücken.

Bei einer weiteren Ausgestaltung der Erfindung ist vorgesehen, daß in der Sperrstellung der Klemmvorrichtung das Druckglied lösbar in eine entsprechende Aussparung in der Keilfläche einrastet. Hierdurch wird die das oder die Druckglieder tragende Klemmvorrichtung sicher in ihrer Sperrstellung gehalten. Bei einer anderen Ausführungsform der Erfindung ist vorgesehen, daß der Keil in Axialrichtung der Muffe verläuft.

Bei einer weiteren Ausgestaltung der Erfindung ist vorgesehen, daß die Muffe mit einem Außengewinde versehen ist, auf das eine Ringmutter mit einem entsprechenden Gewindeabschnitt aufgesetzt ist, die einen konisch sich erweiternden Abschnitt aufweist, der beim Schraubvorgang als Gegenteil auf den Keil aufläuft, wobei drei Keile an drei elastischen, umfangsmäßig gleichmäßig verteilten Zungen vorgesehen sind.

Bei einer besonders vorteilhaften Weiterbildung der Erfindung ist vorgesehen, daß zur Vergrößerung der Reibung zwischen der Innenfläche der Muffe und der Umfangsfläche des inneren Holmstücks die Fläche des Holmstücks und/oder die Innenfläche der Muffe aufgerauht ist. Hierdurch wird der Kraftschluß zwischen der Muffe und dem inneren Holmstück verbessert.

Um die als Klemmvorrichtung dienende Außenmuffe leichter betätigen zu können, ist bei einer weiteren Ausführungsform der Erfindung vorgesehen, daß die Keilfläche bzw. -flächen des bzw. der Keile zur leicht gleitenden Betätigung einen kleinen Reibungskoeffizienten aufweisen.

Um eine besonders langlebige, robuste und auch nach längerem Gebrauch noch einwandfrei funktionierende Sperreinrichtung zu schaffen, die gegen Wasser und insbesondere Seewasser unempfindlich ist, ist bei einem weiteren bevorzugten Ausführungsbeispiel der Erfindung vorgesehen, daß die Muffe aus einem Kunststoff besteht.

Die Erfindung wird im folgenden beispielsweise anhand der Zeichnung näher beschrieben; in dieser zeigt:

Fig. 1 eine teilweise geschnittene Seitenansicht eines Gabelbaums im Bereich der Verbindung des hinteren mit dem vorderen Gabelbaumteils,

Fig. 2 bis 5 schematische Stirnansichten von verschiedenen Ausführungsformen der mit der Muffe verbundenen Schellen,

Fig. 6 eine teilweise geschnittene Draufsicht auf einen Teil des Gabelbaums entsprechend Fig. 1,

Fig. 7 eine perspektivische Teilansicht eines Spannhebels für einen Gabelbaum gemäß Fig. 6,

Fig. 8 einen Längsschnitt durch eine andere Ausführungsform eines Gabelbaums entsprechend Fig. 1,

Fig. 9 einen Schnitt durch einen Gabelbaum im wesentlichen nach Linie IX-IX in Fig. 8,

Fig. 10 einen Schnitt entsprechend Fig. 9 durch ein anderes Ausführungsbeispiel eines Gabelbaums und

Fig. 11 einen Längsschnitt durch den Verbindungsbereich einer weiteren Ausführungsform eines Gabelbaums.

In den verschiedenen Figuren der Zeichnung sind einander entsprechende Bauteile mit gleichen Bezugszahlen bezeichnet.

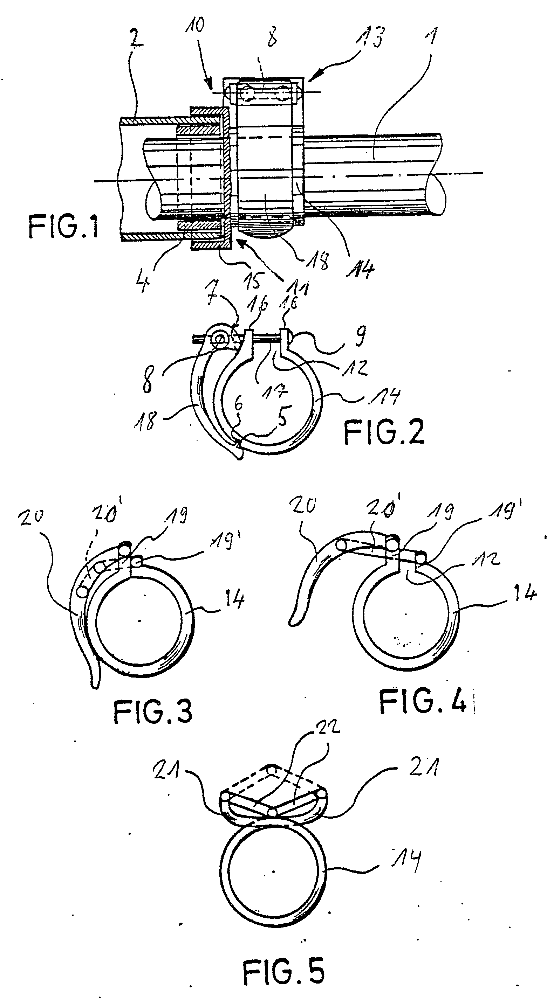

Fig. 1 zeigt den hinteren Abschnitt eines vorzugsweise einem vorderen Gabelbaumteil zugeordneten äußeren Holmstücks 2, in das ein inneres Holmstück 1 eingesetzt ist, das dem hinteren Gabelbaumteil zugeordnet ist. Der Außendurchmesser des inneren Holmstücks 1 ist dabei wesentlich kleiner als der Innendurchmesser des äußeren Holmstücks 2, so daß das innere Holmstück 1 mit beträchtlichem Spiel im äußeren Holmstück 2 angeordnet ist. Hierdurch wird verhindert, daß die beiden Holmstükke 1, 2 infolge von Verunreinigungen, wie z.B. Sand, oder von Korrosion so fest miteinander verkeilt werden können, daß ein Verschieben der Holmstücke 1, 2 gegeneinander praktisch nicht mehr möglich ist.

Am Ende des äußeren Holmstücks 2 ist eine Sperreinrichtung 10 angeordnet, die eine Muffe 11 aufweist, an der eine Klemmvorrichtung 13 vorgesehen ist. Die Muffe 11 besitzt einen Befestigungsabschnitt 15, der auf das äußere Holmstück 2 aufgesetzt und daran befestigt ist, und eine Schelle 14, die - wie in Fig. 2 gezeigt - zwei radial nach oben vorstehende Flansche 16 benachbart zu einem Schlitz 12 trägt.

Durch die Flansche 16 erstrecken sich Zugbolzen 17 hindurch, die mit einem Kopfabschnitt 9 am in Fig. 2 rechten Flansch gehalten sind. Am anderen Ende der Zugbolzen 17 ist ein Lagerstift 8 angebracht, auf dem ein Exzenterhebel 18 schwenkbar gelagert ist. Der Exzenterhebel 18 trägt in seinem Lagerbereich einen Nocken 7, der von außen gegen den in Fig. 2 linken Flansch 16 drückt, um die beiden Flansche 16 aufeinander zuzudrücken, wenn der Exzenterhebel 18 aus seiner Freigabestellung in die in Fig. 2 dargestellte Sperrstellung verschwenkt wird.

Am freien Ende des Exzenterhebels 18 ist eine Nase 6 angeformt, die in eine Aussparung 5 der Schelle 14 einrastet.

In das äußere Holmstück 2 ist schließlich noch eine mit der Muffe 11 verbundene Stützhülse 4 eingesetzt, die in nicht dargestellter Weise axiale Aussparungen aufweisen kann, um ein Ausspülen von Verunreinigungen zwischen den Holmstücken 1, 2 zu ermöglichen.

Die Längenverstellung eines Gabelbaums, bei dem die beschriebene Sperreinrichtung 10 vorgesehen ist, wird wie folgt vorgenommen:

Zunächst wird der Exzenterhebel 18 aus seiner Sperrstellung in seine Freigabestellung geschwenkt, so daß die Schelle 14 das innere Holmstück 1 nur lose umfaßt. Jetzt kann das hintere Gabelbaumteil so weit gegenüber dem vorderen verschoben werden, bis die gewünschte Gabelbaumlänge eingestellt ist. Anschließend wird der Exzenterhebel aus seiner Freigabe- in seine Sperrstellung verschwenkt, wobei er die beiden Flansche 16 mittels seines Nockens 7 aufeinander zudrückt, wobei die Schelle 14 in festen Klemmsitz mit dem inneren Holmstück 1 gelangt, der sowohl axiale Kräfte als auch Torsionskräfte zwischen den Holmstücken 1, 2 überträgt.

Sobald der Exzenterhebel 18 seine Sperrstellung einnimmt, in der die Nase 6 in die Aussparung 5 einrastet, ist das innere Holmstück so fest mit der Schelle 14 der Muffe 11 verklemmt, daß es sich nicht mehr gegenüber der Muffe 11 bzw. dem äußeren Holmstück 2 verschieben kann. Durch die Rastverbindung der am Exzenterhebel 18 vorgesehenen Nase 6 mit der Aussparung 5 der Schelle 14 wird der Exzenterhebel 18 gegen ein unbeabsichtigtes Verschwenken in seine Freigabestellung gesichert.

Der auf eine gewünschte Länge eingestellte Gabelbaum ist nun einsatzbereit.

In Fig. 3 und 4 ist die Schelle 14 der Muffe 11 dargestellt, wobei eine andere Ausführungsform einer Klemmvorrichtung 13 vorgesehen ist. Neben dem Schlitz 12 der Schelle 14 sind sich radial nach außen erstreckende Flansche 19, 19' vorgesehen, die eine unterschiedliche Länge in Radialrichtung aufweisen.

Am in der Zeichnung linken, längeren Flansch 19 ist ein Hebel 20 einer über Totpunkt-Hebelvorrichtung mit seinem einen Ende angelenkt. Im Mittelbereich des Hebels 20 ist ein Gelenkstab 20' schwenkbar befestigt, dessen anderes Ende am kürzeren, rechten Flansch 19' schwenkbar angebracht ist.

Nimmt der Hebel 20 seine in Fig. 4 dargestellte Freigabestellung ein, so umfaßt die Schelle 14 das innere Holmstück 1 des hinteren Gabelbaumteils lose, so daß dieses gegenüber dem äußeren Holmstück 2 des vorderen Gabelbaumteils verschoben werden kann. Beim Verschwenken des Hebels 20 in seine in Fig. 3 dargestellte Sperr- oder Klemmstellung zieht er den Gelenkstab 20' im wesentlichen nach links, so daß die beiden Flansche 19, 19' gegeneinander gedrückt werden. Bevor der Hebel 20 seine Sperrstellung erreicht, in der die Schelle 14 geschlossen ist und das innere Holmstück 1 fest einklemmt, überschreitet der Hebel 20 eine Totpunktstellung, so daß er in seiner Sperrstellung gegen unbeabsichtigtes Lösen gesichert ist.

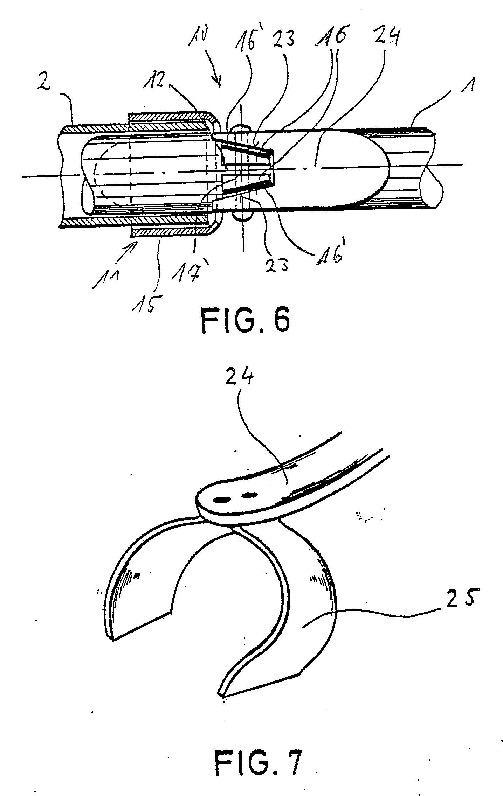

Fig. 5 zeigt eine weitere Schelle 14 einer Muffe 11 die zwei nach oben abgebogene Endabschnitte 21 aufweist. Zwischen den Endabschnitten 21 ist ein Kniehebel 22 vorgesehen, der, wenn er seine in Fig. 5 in ausgezogenen Linien dargestellte Sperrstellung einnimmt, die Endabschnitte 21 so auseinanderdrückt, daß die Schelle 14 geschlossen ist. Wird der Kniehebel 22 in seine gestrichelt dargestellte Freigabestellung gebracht, so können sich die Endabschnitte 21 aufeinander zubewegen, so daß die Schelle 14 lose auf dem inneren Holmstück 1 sitzt.

In Fig. 6 ist ein weiterer Gabelbaum mit einer anderen Sperreinrichtung 10 gezeigt, deren Muffe 11 mit einem Befestigungsabschnitt 15 am äußeren Gabelbaumteil 2 befestigt ist. An der an der Muffe 11 vorgesehenen Schelle sind auf beiden Seiten des Schlitzes 12 Flansche 16 vorgesehen, die an ihren umfangsmäßig voneinander abgewandten Seiten Nockenflächen 16' aufweisen. Mit den Nokkenflächen 16' der Flansche 16 wirken entsprechende Nockenflächen 23 eines Spannhebels 24 zusammen, der von einem Bolzen 17' schwenkbar gelagert wird, der sich durch die Flansche 16 hindurcherstreckt.

Wird der Spannhebel 24 aus seiner Freigabestellung in die in Fig. 6 dargestellte Sperrstellung verschwenkt, so drücken die Nockenflächen 23 gegen die Nockenflächen 16' an den Flanschen 16, so daß die Flansche 16 zum Klemmen der Schelle 14 auf dem inneren Holmstück 1 zusammengedrückt werden.

Um den Spannhebel 24 gegen unbeabsichtigtes Verschwenken aus seiner Sperrstellung zu sichern, ist an seinem hinteren, in Fig. 7 dargestellten Ende ein Ringabschnitt 25 vorgesehen, der das innere Holmstück 1 in einem lösbaren Klemmsitz umgreift, wenn der Spannhebel 24 seine Sperrstellung einnimmt.

Alternativ hierzu kann eine der zusammenwirkenden Nockenflächen 16' oder 23 mit einem nicht dargestellten Vorsprung versehen sein, der in der Sperrstellung des Spannhebels 24 lösbar in eine entsprechende Sicke der anderen Nockenfläche 23 bzw. 16 einrastet.

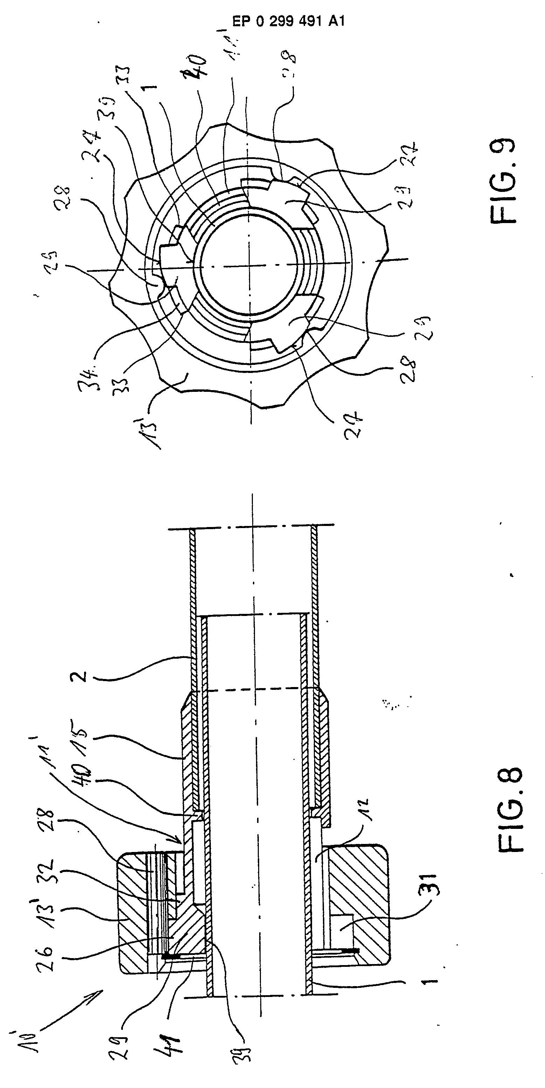

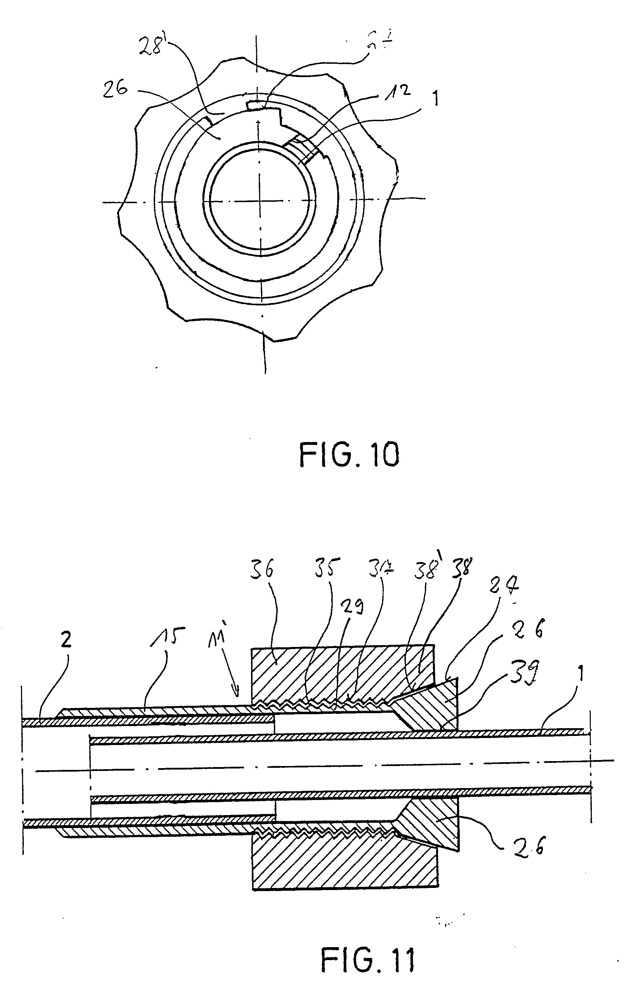

Nach Fig. 8 ist auf dem äußeren Holmstück 2 eine Muffe 11' aufgesetzt, die Bestandteil einer Sperreinrichtung 10' ist und die mit einem Befestigungsabschnitt 15 mit dem äußeren Holmstück 2 verbunden ist. An ihrem freien Ende weist die Muffe 11' freigeschnittene, elastische Zungen 29 auf, die - wie in Fig. 9 dargestellt - umfangsmäßig gleichmäßig verteilt angeordnet sind. Die elastischen Zungen 29 sind jeweils durch einen Schlitz 12 voneinander getrennt. An jeder der Zungen 29 ist ein Keil 26 vorgesehen, der eine außen liegende Keilfläche 27 aufweist. Hinter dem Keil 26 ist ein Vorsprung 32 angeordnet, dessen umfangsmäßige Breite im wesentlichen der des Keiles 26 entspricht.

Ein inneres Holmstück 1 ist durch die Muffe 11' hindurch in das äußere Holmstück 2 eingesetzt, wobei radial innen liegende Anlageflächen 39 mit der Außenoberfläche des inneren Holmstücks 1 in Eingriff stehen. Benachbart zum freien Ende des äußeren Holmstücks 2 ist an der Muffe 11' ein sich radial nach innen erstreckender Ringsteg 40 vorgesehen, der für eine einwandfreie axiale Führung des inneren Holmstücks 1 im äußeren Holmstück 2 sorgt. Um ein Verklemmen des inneren Holmstücks 1 mit der Muffe 11' im Bereich des Ringsteges 40 infolge von Verunreinigungen zu verhindern, kann der Ringsteg 40 in nicht dargestellter Weise mit axialen Durchbrechungen versehen sein.

Auf die Muffe 11' ist als Klemmvorrichtung eine Außenmuffe 13' aufgesetzt, an der zylindrisch ausgebildete Druckglieder 28 angeordnet sind, die mit ihrer Zylinderfläche auf der Keilfläche 27 des Keils 26 auflaufen.

Die Außenmuffe 13' weist eine umlaufende Nut 31 auf, in der die Keile 26 angeordnet sind. Ferner sind in der Außenmuffe den Vorsprüngen 32 zugeordnete Aussparungen 34 vorgesehen, die umfangsmäßig jeweils von Schultern 33 begrenzt sind, so daß die Drehbarkeit der Außenmuffe 13' auf der Muffe 11' begrenzt wird, sobald die Vorsprünge 32 gegen eine der Schultern 33 anstoßen.

Um eine axiale Verschiebung der Außenmuffe 13' auf der Muffe 11' zu verhindern, ist ein die Nut 31 begrenzender Sperring 41 vorgesehen, an dem die elastischen Zungen mit ihren freien Stirnseiten anliegen.

Um die Längenverstellung eines Gabelbaums, der mit einer beschriebenen Sperreinrichtung 10' versehen ist, vornehmen zu können, wird zunächst die Außenmuffe entsprechend Fig. 9 im Gegenuhrzeigersinn soweit verdreht, bis die Vorsprünge 32 an die rechten Schultern 33 an der Außenmuffe 13' anstoßen. Jetzt liegen die elastischen Zungen nur lose mit den den Keilen 26 zugeordneten Anlageflächen 39 am inneren Holmstück 1 an. Dieses kann somit gegenüber der Sperreinrichtung 10' bzw. dem äußeren Holmstück 2 beliebig verschoben werden.

Um das innere Holmstück 1 fest mit dem äußeren Holmstück 2 in einer gewünschten Stellung zu verbinden, wird die Außenmuffe 13 im Uhrzeigersinn verdreht, wobei die Druckglieder 28 auf den Keilflächen 27 der Keile 26 auflaufen und diese radial nach innen drücken, so daß die Anlageflächen 39 in einen festen Klemmsitz mit der Außenfläche des inneren Holmstücks 1 gelangen. Die Bewegung der Außenmuffe 13' wird hierbei wiederum durch die mit den Vorsprüngen 32 zusammenwirkenden Schultern 33 begrenzt.

Um das Aufgleiten der Druckglieder 28 auf den Keilflächen 27 der Keile 26 zu erleichtern, können an den Keilen 26 im Bereich der Keilflächen 27 Materialien mit verringertem Reibungskoeffizienten verwendet werden. Umgekehrt kann zur Verbesserung der kraftschlüssigen Verbindung zwischen den Anlageflächen 39 und der Außenoberfläche des inneren Holmstücks 1 sowohl die Außenoberfläche des inneren Holmstücks als auch die Anlageflächen 39 aufgerauht sein. Es ist ferner auch möglich, auf den Anlageflächen 39 reibungserhöhende Beläge wie z.B. Gummi oder ähnliches vorzusehen.

Anstelle einer Sperrvorrichtung 10' mit drei umfangsmäßig gleichmäßig verteilten Keilen 26 kann - wie in Fig. 10 gezeigt - auch eine Sperreinrichtung vorgesehen werden, deren Muffe 11' nur einen einzelnen axialen Schlitz 12 im Bereich ihres freien Endes aufweist. Am freien Ende der Muffe ist dann ein einzelner Keil 26 vorgesehen, der sich umfangsmäßig fast vollständig um die Muffe 11' herumerstreckt. Der Keil 26 wirkt dabei mit einem an einer Außenmuffe 13' vorgesehenem Gegenkeil 28' zusammen, der als Druckglied wirkt. Der Gegenkeil 28' kann sich dabei ebenfalls in nicht dargestellter Weise nahezu um den gesamten Innenumfang der Außenmuffe 13' herumerstrecken.

Zum Verklemmen des inneren Holmstücks 1 mit der Muffe 11' wird die Außenmuffe 13' wiederum auf der Muffe 11' gedreht, wobei sich diese Drehbewegung umfangsmäßig im wesentlichen über die gesamte Länge des Keils 26 erstreckt.

Fig. 11 zeigt eine Muffe 11' die mit ihrem Befestigungsabschnitt 15 auf einem äußeren Holmstück 2 befestigt ist. Im Bereich ihres freien Endes weist die Muffe 11' elastische Zungen 29 auf, die an ihren freien Enden sich axial erstreckende Keile 26 tragen. Auf der Außenseite der Muffe 11' bzw. der Zungen 29 ist ein Außengewinde 35 vorgesehen, auf das eine mit einem entsprechenden Gewindeabschnitt 37 versehene Ringmutter 36 aufgeschraubt ist. Den Keilen 26 zugeordnet besitzt die Ringmutter 36 einen konischen Abschnitt 38 auf, dessen Innenfläche 38' eine Gegenfläche zu den Keilflächen 27 der Keile 26 bildet.

Wird die Ringmutter 36 bei Verwendung eines Rechtsgewindes links herum gedreht, so schiebt sie sich axial in Richtung der Keile 26, wobei die Flächen 38' des konischen Abschnitts 38 auf die Keilflächen 27 der Keile 26 auflaufen und diese mit ihren Anlageflächen 39 gegen das innere Holmstück 1 pressen.

Ein wesentlicher Vorteil der mit Keilen 26 versehenen Sperreinrichtungen 10' besteht darin, daß die Keile in Radialrichtung jeweils so breit ausgebildet werden können, daß alle vorkommenden Durchmesserunterschiede zwischen dem inneren Holmstück 1 und dem äußeren Holmstück 2 einfach ausgeglichen werden können. Außerdem können auch kleinere Schwankungen der Durchmesserunterschiede zwischen innerem und äußerem Holmstück 1, 2 bereits aufgrund der relativ großen radialen Beweglichkeit der die Keile 26 tragenden elastischen Zungen 29 ausgeglichen werden, ohne daß es erforderlich wäre, die radiale Breite der Keile 26 zu verändern.

**Ansprüche**

1. Längenverstellbarer Gabelbaum mit einem vorderen und einem hinteren Gabelbaumteil, bei dem Endabschnitte von Holmstücken des vorzugsweise hinteren Gabelbaumteils in rohrförmige Holmstücke des vorderen Gabelbaumteils teleskopisch eingeschoben und mit diesen stufenlos in ausgewählter Einschublänge durch jeweils eine mit dem Endabschnitt des äußeren Holmstücks verbundene Sperreinrichtung kraftschlüssig verbindbar sind,
dadurch **gekennzeichnet,**

daß jede Sperreinrichtung (10, 10') eine mit dem äußeren Holmstück (2) verbundene Muffe (11, 11') aufweist, die mit ihrem freien Ende axial vom äußeren Holmstück (2) weg vorsteht,

daß die Muffe (11, 11') an ihrem freien Ende zumindest einen axialen Schlitz (12) aufweist, um eine Verringerung des Innendurchmessers der Muffe (11, 11') im Bereich ihres freien Endes zu ermöglichen und daß an dem geschlitzten Abschnitt der Muffe (11, 11') eine eine Freigabe- und eine Sperrstellung aufweisende Klemmvorrichtung (13, 13') angeordnet ist, die in ihrer Sperrstellung den freien Endabschnitt der Muffe (11, 11') gegen das innere Holmstück (1) drückt.

2. Längenverstellbarer Gabelbaum nach Anspruch 1, dadurch **gekennzeichnet,**
daß der vom äußeren Holmstück (2) vorstehende Ab schnitt der Muffe (11) als Schelle (14) ausgebildet ist, die geöffnet bzw. geschlossen ist, wenn die Klemmvorrichtung (13) ihre Freigabestellung bzw. ihre Sperrstellung einnimmt.

3. Längenverstellbarer Gabelbaum nach Anspruch 2, dadurch **gekennzeichnet,**
daß der auf dem äußeren Holmstück (2) angeordnete Befestigungsabschnitt (15) der Muffe (11) entsprechend der Schelle (14) geschlitzt ist und bei geöffneter Schelle (14) das äußere Holmstück (2) mit einem leichten Klemmsitz umfaßt.

4. Längenverstellbarer Gabelbaum nach Anspruch 2 oder 3, dadurch **gekennzeichnet,**
daß die Schelle (14) benachbart zum Schlitz (12) radial nach außen vorstehende Flansche (16) aufweist, an denen die Klemmvorrichtung (13) angreift, um die Flansche (16) zum Schließen der Schelle (14) gegeneinander zu drücken.

5. Längenverstellbarer Gabelbaum nach Anspruch 4, dadurch **gekennzeichnet,**
daß die Flansche (16) von zumindest einem Zugbolzen (17) durchgriffen sind, an dem außerhalb der Flansche (16) ein Exzenterhebel (18) schwenkbar gelagert ist, bei dessen Verschwenken in eine Sperrstellung die Flansche (16) der Schelle (14) aufeinander zugedrückt werden.

6. Längenverstellbarer Gabelbaum nach Anspruch 4, dadurch **gekennzeichnet,**
daß die Flansche (19, 19') unterschiedliche Längen aufweisen, wobei eine über Totpunkt-Hebelvorrichtung (20, 20') an die Flansche (19, 19') angelenkt ist, von der sie aufeinander zubewegbar sind.

7. Längenverstellbarer Gabelbaum nach Anspruch 2 oder 3, dadurch **gekennzeichnet,**
daß die Schelle (14) sich übergreifende, abgebogene Endabschnitte (21) aufweist, zwischen denen ein Kniehebel (22) vorgesehen ist, von dem die Endabschnitte (21) voneinander wegbewegbar sind.

8. Längenverstellbarer Gabelbaum nach Anspruch 4, dadurch **gekennzeichnet,**
daß die Flansche (16) an ihren voneinander abgewandten Außenseiten Nockenflächen (16') aufweisen, die zur Achse eines die Flansche (16') durchgreifenden Bolzens (17') geneigt verlaufen, und daß im losen Zustand der Schelle (14) an den Nockenflächen (16') zwei entsprechend geformte Nockenflächen (23) eines auf dem Bolzen (17') schwenkbar gelagerten Spannhebels (24) anliegen, dessen Nockenflächen (23) beim Verschwenken des Spannhebels (24) die Flansche (16) der Schelle (14) zusammendrücken.

9. Längenverstellbarer Gabelbaum nach Anspruch 8, dadurch **gekennzeichnet,**
daß an dem Spannhebel (24) ein elastischer Ringabschnitt (25) befestigt ist, der das äußere Holmstück (2) in einem lösbaren Klemmsitz umgreift, wenn der Spannhebel (24) in seiner Sperrstellung ist, um diesen zu arretieren.

10. Längenverstellbarer Gabelbaum nach Anspruch 8, dadurch **gekennzeichnet,**
daß ein zumindest an einer Nockenfläche (16' bzw. 23) ausgebildeter Vorsprung und eine in der damit zusammenwirkenden Nockenfläche (23 bzw. 16') ausgebildete, entsprechende Vertiefung vorgesehen sind, die im gespannten Zustand der Schelle (14) lösbar ineinander einrasten.

11. Längenverstellbarer Gabelbaum nach Anspruch 1, dadurch **gekennzeichnet,**
daß am freien Ende der Muffe (11') auf deren Außenseite zumindest ein Keil (26) mit einer radial außen liegenden Keilfläche (27) vorgesehen ist, der mit einem Druckglied (28) der Klemmvorrichtung (13') so zusammenwirkt, daß das freie Ende der Muffe (11') mit seiner Innenfläche fest gegen das innere Holmstück (1) gepreßt wird, wenn das Druckglied (28) auf die Keilfläche (27) aufläuft.

12. Längenverstellbarer Gabelbaum nach Anspurch 11, dadurch **gekennzeichnet,**
daß der wenigstens eine Keil (26) in Umfangsrichtung der Muffe (11) verläuft.

13. Längenverstellbarer Gabelbaum nach Anspruch 11 oder 12, dadurch **gekennzeichnet,**
daß der Keil (26) sich in Umfangsrichtung nahezu vollständig um die Muffe (11') herumerstreckt.

14. Längenverstellbarer Gabelbaum nach Anspruch 11 oder 12, dadurch **gekennzeichnet,**
daß im freien Ende der Muffe (11') zwei einander diametral gegenüberliegende Schlitze (12) vorgesehen sind und daß zwei Keile (26) sich jeweils umfangsmäßig von Schlitz (12) zu Schlitz (12) erstrekken.

15. Längenverstellbarer Gabelbaum nach Anspruch 11 oder 12,
dadurch **gekennzeichnet,**
daß der wenigstens eine Keil (26) an einer sich in Radialrichtung erstreckenden, freigeschnittenen, elastischen Zunge (29) am freien Ende der Muffe (11') vorgesehen ist.

16. Längenverstellbarer Gabelbaum nach Anspruch 11 bis 15, dadurch **gekennzeichnet,**
daß die Klemmvorrichtung eine drehbar auf der Muffe (11') angeordnete Außenmuffe (30) aufweist, in deren Innenfläche eine Nut (31) zur Aufnahme und Führung des wenigstens einen Keils (26) ausgebildet ist.

17. Längenverstellbarer Gabelbaum nach Anspruch 16, dadurch **gekennzeichnet,**
daß das Druckglied (28) für den Keil (26) am Nutboden in der Außenmuffe (30) angeordnet ist.

18. Längenverstellbarer Gabelbaum nach Anspruch 16 oder 17, dadurch **gekennzeichnet,**
daß an der radial äußeren Seite der elastischen Zunge (29) ein Vorsprung (32) angebracht ist, der in eine von in Umfangsrichtung voneinander beabstandete Schultern (33) begrenzte Aussparung (34) in der Innenfläche der Außenmuffe (30) eingreift, um die Drehbarkeit der Außenmuffe (30) auf der Muffe (11') zu begrenzen.

19. Längenverstellbarer Gabelbaum nach Anspruch 11 bis 18, dadurch **gekennzeichnet,**
daß das Druckglied ein der Form des Keils (26) entsprechender Gegenkeil (28') ist.

20. Längenverstellbarer Gabelbaum nach Anspruch 15 bis 19, dadurch **gekennzeichnet,**
daß zwei sich diametral gegenüberliegende Keile (26) an zwei elastischen Zungen (29) ausgebildet sind.

21. Längenverstellbarer Gabelbaum nach Anspruch 15 bis 19, dadurch **gekennzeichnet,**
daß drei gleichmäßig über den Umfang verteilte Keile (26) an drei elastischen Zungen (29) ausgebildet sind.

22. Längenverstellbarer Gabelbaum nach Anspruch 11 bis 21, dadurch **gekennzeichnet,**
daß das Druckglied (28) im wesentlichen zylindrisch ist, wobei dessen Zylinderwand auf die Keilfläche (27) aufläuft.

23. Längenverstellbarer Gabelbaum nach Anspruch 11 bis 22, dadurch **gekennzeichnet,**
daß in der Sperrstellung der Klemmvorrichtung (13') das Druckglied (28) lösbar in eine entsprechende Aussparung in der Keilfläche (27) einrastet.

24. Längenverstellbarer Gabelbaum nach Anspruch 11, 12 oder 15, dadurch **gekennzeichnet,**
daß der Keil (26) in Axialrichtung der Muffe (11') verläuft.

25. Längenverstellbarer Gabelbaum nach Anspruch 24, dadurch **gekennzeichnet,**
daß die Muffe (11') mit einem Außengewinde (35) versehen ist, auf das eine Ringmutter (36) mit einem entsprechenden Gewindeabschnitt (37) aufgesetzt ist, die einen konisch sich erweiternden Abschnitt (38) aufweist, der beim Schraubvorgang als Gegenkeil auf den Keil (26) aufläuft.

26. Längenverstellbarer Gabelbaum nach Anspruch 24 oder 25, dadurch **gekennzeichnet,**
daß drei Keile (26) an drei elastischen, umfangsmäßig gleichmäßig verteilten Zungen (29) vorgesehen sind.

27. Längenverstellbarer Gabelbaum nach einem der vorhergehenden Ansprüche,
dadurch **gekennzeichnet,**
daß zur Vergrößerung der Reibung zwischen der Innenfläche der Muffe (11, 11') und der Umfangsfläche des inneren Holmstücks (1) die Fläche des Holmstücks und/oder die Innenfläche der Muffe (11, 11') aufgerauht ist.

28. Längenverstellbarer Gabelbaum nach Anspruch 11 bis 27, dadurch **gekennzeichnet,**
daß die Keilfläche bzw. -flächen des bzw. der Keile (26) zur leicht gleitenden Betätigung einen kleinen Reibungskoeffizienten aufweisen.

29. Längenverstellbarer Gabelbaum nach einem der vorhergehenden Ansprüche,
dadurch **gekennzeichnet,**
daß die Muffe (11, 11') aus einem Kunststoff besteht.

EP 0 299 491 A1

FIG.1

FIG.2

FIG.3

FIG.4

FIG.5

FIG. 6

FIG. 7

FIG.8

FIG.9

EP 0 299 491 A1

FIG. 10

FIG. 11

# EUROPÄISCHER RECHERCHENBERICHT

Europäisches Patentamt

Nummer der Anmeldung

| | EINSCHLÄGIGE DOKUMENTE | | EP 88111350.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP - A1 - 0 098 898 (HOSHINO GAKKI COMPANY LTD.) <br> * Gesamt * <br> -- | 1-5 | B 63 H 9/10 <br> B 63 B 35/82 <br> F 16 B 7/14 |
| X | DE - A1 - 2 632 526 (FELSBERG) <br> * Fig. 1,2 * <br> -- | 1,11 | |
| A | FR - A1 - 2 543 510 (SINGER SA.) <br> * Fig. 3 * <br> -- | 1 | |
| A | DE - A1 - 3 143 793 (HAUS) <br> * Fig. 2 * <br> -- | 1 | |
| D,A | EP - A1 - 0 071 220 (MISTRAL WIND-SURFING AG) <br> * Gesamt * <br> -- | 1 | |
| D,A | DE - A1 - 3 125 806 (MARKER) <br> * Gesamt * <br> ---- | 1 | |

RECHERCHIERTE SACHGEBIETE (Int. Cl.4)

B 63 H
B 63 B
F 16 B

Der vorliegende Recherchenbericht wurde für alle Patentansprüche erstellt.

| Recherchenort | Abschlußdatum der Recherche | Prüfer |
|---|---|---|
| WIEN | 13-10-1988 | SCHMICKL |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82